# EUROPÄISCHE PATENTANMELDUNG

(11) **EP 1 308 258 A1**
(43) Veröffentlichungstag der Anmeldung: **07.05.2003**
(21) Anmeldenummer: 02023681.6
(22) Anmeldetag: 22.10.2002
(51) Int. Cl.: B29C 45/00, B29C 37/02

(54) **Verfahren und Vorrichtung zur Vermeidung von Kunststoff-Haaren beim Spritzgiessen**

(30) Priorität: 30.10.2001 DE 10153474
(71) Anmelder: Sulo Umwelttechnik GmbH & Co. KG, 32051 Herford (DE)
(72) Erfinder: Klein, Adolf, 32049 Herford (DE)
(74) Vertreter: Alber, Norbert, Dipl.-Ing.

(57) **Zusammenfassung**

Es wird ein Verfahren sowie eine Vorrichtung zum Herstellen von Kunststoff-Spritzguss-Produkten beschrieben, mit deren Hilfe bei Spritzguss-Produkten das Auftreten von Kunststoff-Haaren vermieden wird bzw. diese nachträglich beseitigt werden, wobei das Produkt nach der Entnahme aus der Spritzgussform mit einer Temperatur oberhalb der Schmelztemperatur des Kunststoffes beaufschlagt wird.

## Beschreibung

### I. Anwendungsgebiet

Die Erfindung betrifft ein Verfahren sowie eine Vorrichtung zum Herstellen von Kunststoff-, Spritzguss-, Produkten.

### II. Technischer Hintergrund

Derartige Produkte werden in einer Form gespritzt, die aus mindestens zwei Teilen besteht, die zum Spritzen an wenigstens einer Trennfläche fest gegeneinander gepreßt werden und zum Entnehmen des fertig gespritzten Produktes voneinander entfernt werden.

Dabei besteht ein Problem darin, dass die Teile der Form an den Trennflächen, insbesondere in den am Produkt angrenzenden Bereichen, unter Umständen nicht exakt flächig aneinander anliegen, sondern dazwischen feine, teilweise linienförmige, Hohlräume zwischen den gegeneinander gefahrenen Teilen der Form verbleiben mit dem Ergebnis, dass flüssiger Kunststoff über die Soll-Kontur des herzustellenden Produktes hinaus in die Trennfläche zwischen den Teilen der Form eindringt mit der Folge, dass das entnommene Produkt von der Soll-Kontur des Produktes abstrebende Fortsätze, sogenannte Haare, aus Kunststoff aufweist, die nicht erwünscht sind.

Diese Haare können sich während des späteren Gebrauches des Produktes lösen und herabfallen, was besonders dann unerwünscht ist, wenn es sich bei dem Produkt um eine Verpackung, z. B. in Form eines topfförmigen Korpus und/oder dazu passenden topfförmigen Deckels, handelt und die sich vom Produkt lösenden Haare dabei ins Innere dieses Behälters fallen und sich mit dem im Behälter aufzunehmenden Inhalt vermischen und diesen verunreinigen.

Ein weiteres Problem kann darin bestehen, dass die Haare sich auf einer Fläche des Produktes befinden, die später während des Gebrauches des Produktes z.B. als Dichtfläche dient, wobei die Haare ein dichtes Anliegen einer Dichtung oder eines anderen Teiles verhindern können.

Zwar wird man versuchen, dieses Problem bereits konstruktiv zu lösen, indem die Trennfläche zwischen den Teilen der Form und damit die Haare nicht auf einer solchen Dichtungs-Fläche angeordnet werden, jedoch ist dies nicht in allen Fällen möglich.

Ferner ist es bereits bekannt, derartige Haare nach der Spritzguss- Herstellung des Produktes mechanisch zu entfernen mittels Schneiden oder Schleifen.

Der Nachteil dieser Methode besteht darin, dass dann nicht mehr die Formgebung des Form-Werkzeuges die endgültige Konturierung des Produktes bestimmt, sondern in Teilbereichen die Qualität dieser mechanischen Nachbearbeitung.

Zusätzlich läßt sich eine solche mechanische Nachbearbeitung schwer automatisieren, vor allem mit reproduzierbaren Ergebnissen, da diese unter anderem wieder von dem Verschleiß des dabei benutzen Werkzeuges abhängt.

### III. Darstellung der Erfindung

### a) Technische Aufgabe

Es ist daher die Aufgabe gemäß der Erfindung, ein Verfahren bzw. eine Vorrichtung zu schaffen, mit deren Hilfe bei Spritzguss-Produkten das Auftreten solcher Haare vermieden bzw. diese nachträglich beseitigt werden.

### b) Lösung der Aufgabe

Erfindungsgemäß wird diese Aufgabe gemäß Anspruch 1 dadurch gelöst, dass die Haare mittels Temperatureinwirkung geschmolzen und dadurch flächig an der Oberfläche des Produktes fixiert, insbesondere mit diesem zu einer Einheit verbunden werden, und dieses Anschmelzen nach der Spritzguss-Herstellung des Produktes erfolgt, insbesondere auf dem Bewegungsweg zwischen der Entnahme aus der Spritzgussmaschine, also aus der Form, und dem Verbringen zu einer Ablageposition, was in der Regel mittels eines Automatisierungsarmes erfolgt.

Die einwirkende Temperatur ist dabei höher als die Schmelztemperatur des für das Produkt verwendeten Kunststoffes, und die Einwirkungszeit ausreichend, um den gesamten Querschnitt der Haare teigig bzw. flüssig werden zu lassen. Da der Querschnitt der Haare wesentlich, insbesondere um mehr als den Faktor 100, geringer ist als der Soll-Querschnitt des hergestellten Produktes, wird dadurch das Produkt selbst noch nicht flüssig oder teigig bzw. von der Oberfläche aus nur bis in eine so geringe Tiefe, dass dadurch die Formhaltigkeit des hergestellten Produktes nicht wesentlich berührt wird.

Insbesondere wird die Temperatureinwirkung durch Beaufschlagen mittels Heißluft bewirkt, und ein Heißluftstrom, insbesondere ein Vorhang aus Heißluft, stationär angeordnet am Bewegungsweg des Produktes.

Insbesondere bei topfförmigen Produkten wird die linienförmige Düse für die Heißluft quer zur Bewegungsrichtung knapp neben der Bewegungsbahn des Produktes angeordnet und das Produkt insbesondere mit seiner offenen Seite zur Düse hin gerichtet an der Düse vorbei bewegt, wobei der Abstand zwischen Düse und Produkt in Abhängigkeit von der Ausströmungstemperatur der Heißluft aus der Düse variiert werden kann.

Insbesondere beträgt die Ausströmungstemperatur wenigstens 400°C, insbesondere wenigsten 450°C, insbesondere zwischen 400°C und 420°C, und der geringste Abstand zwischen Düse und Produkt unter 20 mm, insbesondere zwischen 5 mm und 20 mm, insbesondere zwischen 5 mm und 15 mm.

Die Form der Düse kann gemäß der Außenkontur des Produktes, insbesondere betrachtet in dessen Bewegungsrichtung, analog geformt sein und sich zu diesem Zweck entlang der Außenkontur des Produktes teilweise entlang erstrecken.

Stattdessen und/oder zusätzlich kann das Produkt vor der Düse zusätzlich rotiert werden, insbesondere wenn es sich bei dem Produkt um ein rotationssymmetrisches Produkt handelt und/oder bei nicht rotationssymmetrischen Produkten die radial außerhalb des Produktes angeordneten Teile der Düse radial zum Produkt so bewegt werden, dass jeweils der gewünschte Sollabstand zum Produkt eingehalten wird.

Vorzugsweise wird jedoch das Produkt lediglich an der Heißluftdüse vorbei bewegt, was den Vorteil bietet, dass die Taktzeit der Spritzgussmaschinen hierdurch nicht erhöht wird, und aufgrund der stationären Anordnung der Heißluftdüse am Bewegungsweg des zu entnehmenden Produktes die hierfür benötigte Zusatzvorrichtung an der Spritzgussmaschine relativ einfach und kostengünstig ist. Da die Position des Auftretens von Haaren am Produkt bekannt ist, kann zusätzlich die Orientierung der Düsen bzw. von in den Düsen angeordneten Leitvorrichtungen, insbesondere Leitblechen, so gewählt werden, dass ein möglichst größer Anteil der Haare quer zu Richtung seines Abstrebens vom Produkt von der Heißluft beaufschlagt wird, vor allem bei Haaren, die sich auf der Außenkontur des Produktes befinden, und die Richtung des Heißluftstromes so gewählt werden, dass die Haare, welche wegen der Erweichung am Ansatz vom Produkt abgerissen werden, durch die Strömung der Heißluft vom Produkt weg transportiert werden.

Sollte dies aus strömungstechnischen Gründen oder weil sich die Position der Haare im Inneren eines topfformigen Produktes befindet, nicht möglich bzw. nicht zuverlässig möglich sein, wird eine Anströmung der Haare entgegen deren Richtung des Abstrebens vom Produkt bevorzugt, wodurch die teigig bzw. flüssig gewordenen Haare flächig an der Oberfläche des Produktes angeschmolzen werden.

Durch die Verweilzeit der Beaufschlagung bzw. auch die Dicke des Heißluft-Teppichs in Relation zur Bewegungsgeschwindigkeit des Produktes an der Düse vorbei, kann beeinflußt werden, wie großflächig und damit dünn die durch die Haare bewirkte Aufschmelzung auf der Oberfläche des Produktes wird.

Sofern die Formhaltigkeit dies zuläßt, kann eine geringflächige, etwa halbkugelförmige Aufschmelzung auf der Oberfläche des Produktes die schnellste, billigste und hinsichtlich des unerwünschten Ablösens sicherste Variante sein.

Sofern die Produkte an der Stelle der Beaufschlagung zusätzlich rotiert werden, kann eine tangentiale Anströmung oder wenigstens teilweise tangentiale Anströmung der Produkte durch die Heißluft vorteilhaft sein, da dies ein Abreißen der Haare besonders zuverlässig auftreten läßt.

### c) Ausführungsbeispiele

Eine Ausführungsform gemäß der Erfindung ist im folgenden anhand der Figuren beispielhaft näher beschrieben.

Es zeigen:
- Figur 1:: die Prinzipdarstellung eines Teiles einer Spritzgussform,
- Figur 2a:: eine Heißluftvorrichtung mit daran vorbei bewegtem topfförmigen ersten Produkt (Korpus),
- Figur 2b:: die Heißluftvorrichtung mit daran vorbei bewegtem topfförmigen zweiten Produkt ( Deckel),
- Figur 3:: die Heißluftbeaufschlagung in Blickrichtung der Bewegungsrichtung des Produktes und
- Figur 4:: die Vorrichtung betrachtet entgegen der Ausströmungsrichtung der Heißluft.

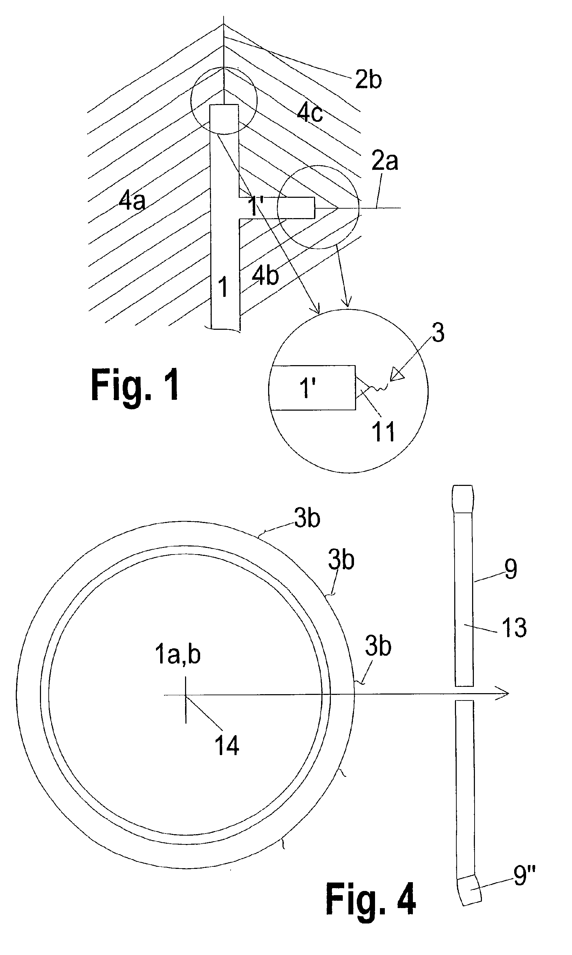

Figur 1 zeigt in einer Detaildarstellung den frei auslaufenden Rand eines Produktes 1, welches zusätzlich einen radial nach außen vorstehenden Fortsatz 1' aufweist.

Eine solche Querschnittsgestaltung eines Produktes 1 kann nicht mehr mit einer zweiteiligen Form, bestehend aus z. B. Innenform 4a und Außenform 4b erreicht werden, und da dann eine Entformung des Produktes in Fig. 1 nach oben oder unten nicht mehr möglich ist. Deshalb ist zusätzlich eine Ringform 4c notwendig, und erst nachdem die drei Teile 4a, b, c auf ausreichenden Abstand zueinander gebracht worden sind, kann dann das entsprechende Produkt 1 entnommen werden.

Bei drei Formteilen berühren sich diese entlang wenigstens zweier Trennflächen 2a,b, welche somit auch entlang zweier separater Stellen, in Fig. 1 entlang zweier Linien, auf das Produkt 1 treffen.

Die vergrößerte Detaildarstellung innerhalb der Fig. 1 zeigt ein solches freies Ende 1' des Produktes 1 im Bereich einer solchen Trennebene 2a nach dem Entformen, wobei auf der Oberfläche des Produktes 1 dann immer ein kaum vermeidbarer, von der Sollkontur des Produktes vorstehender, z. B. im Querschnitt dreieckiger, Grat 11 entsteht, da die Oberflächen zueinander benachbarter Formteile 4b, c nie 100%ig zueinander zur Fluchtung zu bringen sind.

Zusätzlich ist in dieser Detailvergrößerung eines der unerwünschten Haare 3 zu erkennen, die von der Soll-Oberfläche des Produktes 1 aus nach außen abragen und mit einem Ende einstückig mit dem Produkt 1 verbunden sind, in der Praxis jedoch häufig in ihrem Verlauf mehr oder weniger lose an der Oberfläche entweder des Grates 11 oder des restlichen Produktes 1 anliegen, jedoch nicht fest mit diesem verbunden sind.

Entlang des Grates 11 bzw. dem linienförmigen Auftreffen der Trennfläche z. B. 2a auf der Oberfläche des Produktes 1 sind eine Vielzahl solcher Haare 3 zu beobachten, die unerwünscht sind.

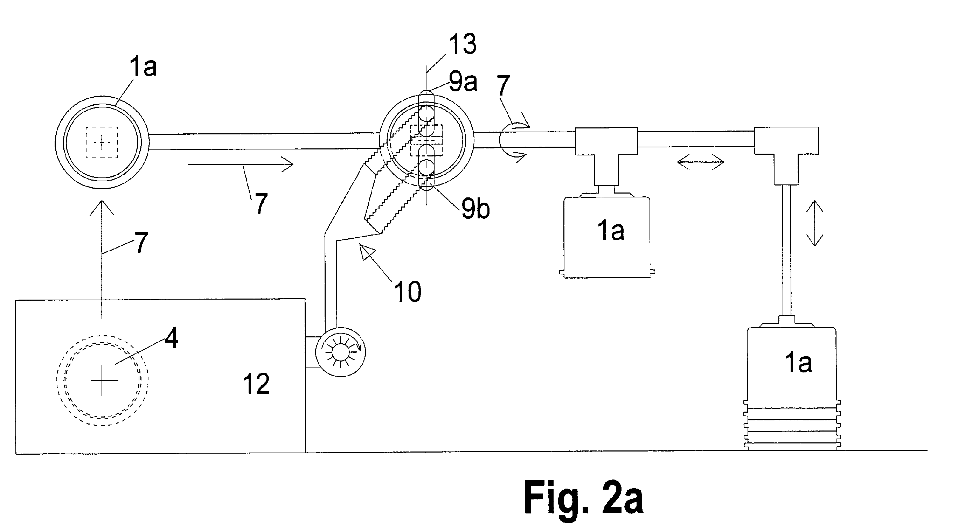

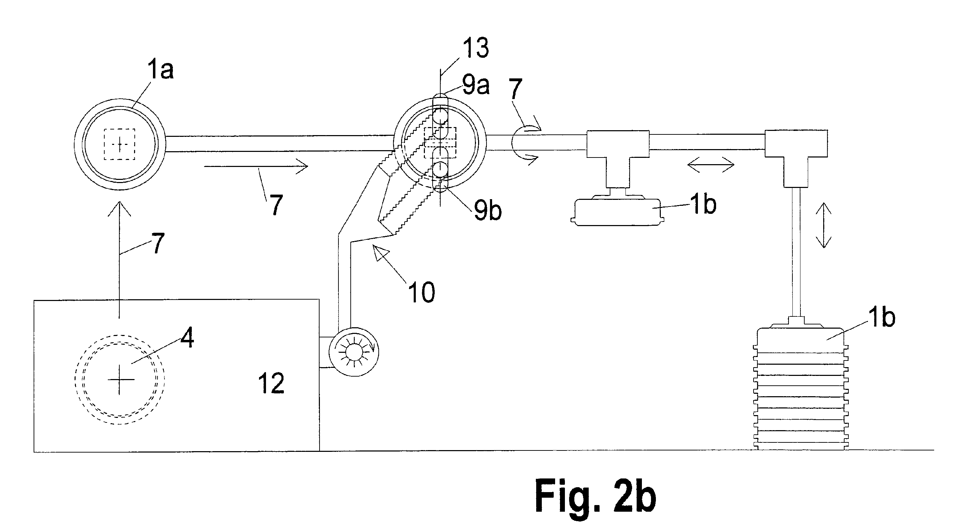

Figur 2a, und 2b zeigen eine Heißluft-Vorrichtung 10, die an einer Spritzgussmaschine 12 stationär montiert ist knapp neben dem Bewegungsweg der Produkte 1a bzw. 1b (in diesem Fall Korpus bzw. Deckel, die als Spritzgussprodukt hergestellt sind und in den Figuren 2a bzw. 2b mittels des Handhabungsarmes aus der Spritzgussmaschine entnommen und zu einer Ablageposition verbracht werden).

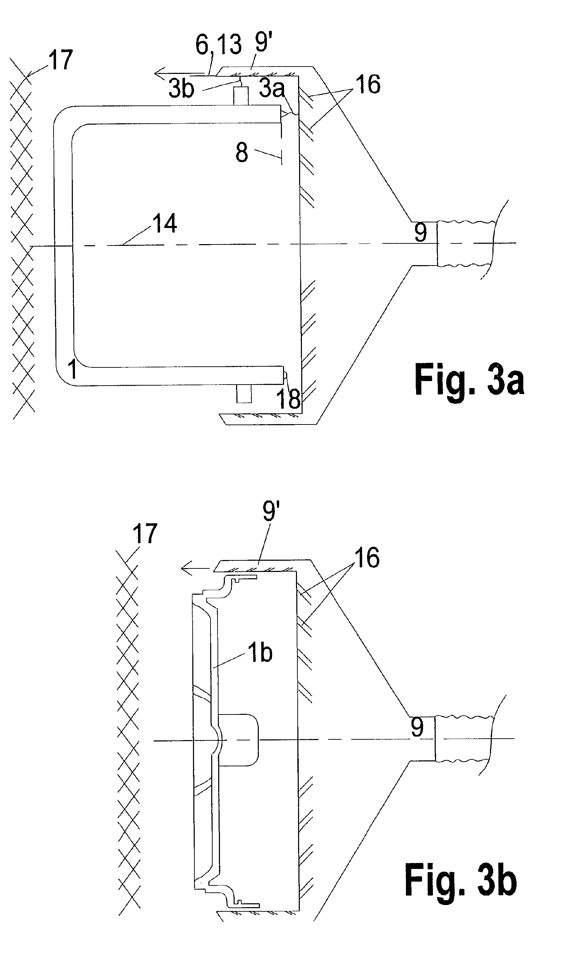

Wie besser der vergrößerten Detailansicht der Figur 3 zu entnehmen, wird mittels einer oder auch zwei aneinander anschließender etwa linienförmiger Düsen 9a, b ein Heißluftstrom 6 in Form einer dünnen, plattenförmigen Ebene, ein sogenannter Heißluft-Vorhang 13 erzeugt, durch den die Produkte 1a, b mit ihrer offenen Seite der Düse 9a, b zugewandt hindurch bewegt werden mit geringem Abstand zur Düse.

Die Ausströmtemperatur der Heißluft an der Düse 9a, b wird überwacht und beträgt in der Regel etwas mehr als die Teigtemperatur bzw. Schmelztemperatur des zum Spritzgießen verwendeten Kunststoffes, in der Regel zwischen 400°C und 450°C.

Wie die Figuren 2 - 4 zeigen, ist im vorliegenden Fall das Produkt 1a, b jeweils zusätzlich im wesentlichen rotationssymmetrisch bis auf einige über den Umfang verteilte, separate Versteifungen auf der Außenseite.

Die Haare 3a, b können - wie der Figur 1 zu entnehmen - dabei an der offenen Stirnfläche des Produktes 1 oder einer radial nach außen gerichteten Ringfläche auftreten.

Eine Strömungsrichtung 15, wie in Figur 2a,b eingezeichnet, also lotrecht auf die Öffnungsebene 8 gerichtet, erlaubt einerseits ein lineares Entlangbewegen der Produkte 1 an der stationären Heißluftvorrichtung 10, und ermöglicht andererseits einen Verzicht auf ein zusätzliches Rotieren der Produkte 1a, b vor der Düse 9 bzw. den Düsen 9a, b der Figur 2, die hier noch ohne weiteres zu einer einzigen Düse, wie in Figur 3 dargestellt, zusammengefaßt werden könnten.

Dabei werden die Haare 3a entgegen ihrer theoretischen Abstrebungsrichtung beaufschlagt und durch den Heißluftstrom 6 gegen die sie tragende Stirnfläche des Produktes 1 gedrückt und dort flächig, bzw. in Form einer geringfügigen Erhebung, aufgeschmolzen.

Durch die flächige Verschmelzung mit dem Produkt 1 ist die Gefahr eines späteren Ablösens vom Produkt 1 beseitigt. Die Höhe bzw. Fläche der Aufschmelzung kann durch die Einwirkdauer der Heißluft und deren Temperatur/oder Druck beeinflußt werden.

Je intensiver die Beaufschlagung ist, um so flächiger und weniger hoch wird die Aufschmelzung sein. Aufgrund des in diesem Bereich ohnehin vorhanden Grates 11 kann hier eine relativ hoch aufragende, bzw. halbkugelförmige, Aufschmelzung 18 - wie in Figur 3 unten dargestellt - mit geringer Fläche sogar das kleinere Übel sein. Im übrigen ist das Volumen der Haare so gering, daß selbst eine solche halbkugelförmige Aufschmelzung ein Volumen von weniger als in der Regel 1 mm³ aufweist mit entsprechender Abmessung der halbkugeligen Aufschmelzung.

Die Haare 3b, die im wesentlichen nach radial außen abstreben, können - bei gleichmäßiger Ausströmungsrichtung 15 über die gesamte Erstreckung der Düse 9 - im wesentlichen quer von der Heißluft angeströmt werden. Dies führt dazu, daß in der Regel kein Aufschmelzen auf der Oberfläche des Produktes erfolgt, sondern wegen der Erwärmung des Haares 3b über seine gesamte Länge, gegenüber einem wesentlich langsameren und geringeren Erwärmen der Oberfläche des Produktes 1 das Haar 3b durch die Strömungsgeschwindigkeit der Heißluft 6 am Ansatz zum Produkt abgerissen und durch die Heißluft fortgetragen wird.

Wegen der leicht konischen Form des Behälters und der Strömungsrichtung 15 parallel zur Symmetrieachse des Produktes 1 werden die Haare 3b in der Regel nach dem Abreißen nicht auf dem Produkt auftreffen, sondern an einer in Strömungsrichtung dahinter vorhandenen Auffangvorrichtung 17 aus einem Gitter, einer Gaze, einem Textilgewebe oder ähnlichem, und dort verkleben.

Der beschriebene Vorgang findet vor allem statt bei den gemäß Figur 4 als erstes in den Vorhang 13 aus Heißluft 6 eintretenden Haaren 3a des Produktes 1.

Figur 3 zeigt dagegen die Gestaltung einer Düse 9, die einen Fortsatz 9' aufweist, der sich außerhalb der Breite des Produktes 1 neben der Außenkontur des Produktes auf der Linie der Düse 9 erstreckt und damit die Möglichkeit bietet, die Außenkontur des Behälters, insbesondere die radial nach außen abstrebenden Haare 3b, auch radial von außen zu beaufschlagen.

Eine solche Anordnung ist vor allem dann sinnvoll, wenn sich bei rotationssymmetrischen Produkten 1 die Rotationsachse 14 deckungsgleich im Vorhang 13 des Heißluftstromes befindet, das Produkt 1 um seine Rotationsachse zusätzlich gedreht wird, da dann alle radial außen angeordneten Haare 3b nacheinander nahe an der Ausströmungsöffnung dieses Fortsatzes 9' der Düse 9 entlang bewegt werden, wofür bei zwei diametral gegenüberliegenden Fortsätzen 9' eine Drehung um nur 180° erforderlich ist.

Zusätzlich können in der Düse 9 und auch einem Fortsatz 9' einer solchen Düse 9, Leitbleche 16 als Leitvorrichtung vorhanden sein, um den Luftstrom 6 nicht nur in Richtung der Längserstreckung insbesondere der Rotationsachse 14 des Produktes 1, auch dessen Randfläche auftreffen zu lassen, sondern ihm bzw. eine zusätzliche radiale Komponente zu geben und dadurch auch die an der vorderen Stirnfläche, der Öffnungsebene 8, angeordneten Haare 3a im Falle eines Abreißens nach außen, also vom Behälter weg zu transportieren.

Zusätzlich kann ein evtl. wie vorgeschrieben vorhandener Fortsatz 9" bezüglich einer in der Aufsicht runden Außenkontur des Produktes 1 ganz oder teilweise tangential orientiert sein, um auch dadurch bei abreißenden Haaren 3 einen Abtransport von der Oberfläche des Behälters 1 sicherzustellen.

### BEZUGSZEICHENLISTE

- 1a,b: Produkt
- 2 a,b: Trennfläche
- 3: Haare
- 4a,b: Form
- 5: Ansatz
- 6: Heißluftstrom
- 7: Bewegungsrichtung
- 8: Öffnungsebene
- 9a,b: Düse
- 10: Heißluft-Vorrichtung
- 11: Grat
- 12: Spritzgussmaschine
- 13: Vorhang
- 14: Rotationsachse
- 15: Strömungsrichtung
- 16: Leitblech
- 17: Auffangvorrichtung
- 18: Aufschmelzung

## Patentansprüche

1. Vorrichtung zur Entfernung von einstückig mit dem Formteil verbundenen Kunststoffhaaren bei der Herstellung von Kuststoff-Spritzgußprodukten,
**gekennzeichnet durch**
eine Heißluftvorrichtung (10) am Bewegungsweg der Produkte (1) nach deren Entnahme aus der Form (4).

2. Vorrichtung nach Anspruch 1,
**dadurch gekennzeichnet, dass**
- die Heißluftvorrichtung (10) eine Düse (9) mit linienförmiger Ausströmungsöffnung umfaßt und die Strömungsrichtung (15) quer, insbesondere lotrecht, zur Bewegungsrichtung (7) des Produktes (1) angeordnet ist, und insbesondere
- die linienförmige Ausströmungsöffnung der Düse (9) senkrecht verläuft und eine Handhabungsvorrichtung das Produkt (1) horizontal durch den Vorhang durch Heißluft hindurch bewegt.

3. Vorrichtung nach einem der vorhergehenden Ansprüche,
**dadurch gekennzeichnet, dass**
die Heißluftvorrichtung (10) eine Auffangvorrichtung (17) für die entfernten Haare (3) stromabwärts der Produkte (1) in Strömungsrichtung (15) der Heißluft umfasst.

4. Vorrichtung nach einem der vorhergehenden Ansprüche,
**dadurch gekennzeichnet, dass**
die Handhabungseinheit auf der von der Düse (9) abgewandten Rückseite, bei einem topfförmigen Produkt insbesondere am Boden des Produktes, angreift.

5. Verfahren zum Herstellen von Kunststoff-Spritzguss-Produkten (1a, b) unter Vermeidung von im Bereich der Formtrennebene (2a, b) einteilig mit dem Produkt (1a,b) ausgebildete Kunststoffhaare (3)
**dadurch gekennzeichnet, dass**
das Produkt nach der Entnahme aus der Spritzgussform (4a, b) mit einer Temperatur (T) oberhalb der Schmelztemperatur (Ts) des Kunststoffes beaufschlagt wird.

6. Verfahren nach Anspruch 5,
**dadurch gekennzeichnet, dass**
die Beaufschlagung solange erfolgt, dass die Haare vom Produkt am Ansatz geschmolzen und abgerissen werden.

7. Verfahren nach einem der vorhergehenden Ansprüche,
**dadurch gekennzeichnet, dass**
die Beaufschlagung solange erfolgt, dass die Haare am Produkt, insbesondere am Ansatz des Produktes, flächig angeschmolzen werden.

8. Verfahren nach einem der vorhergehenden Ansprüche,
**dadurch gekennzeichnet, dass**
- die Beaufschlagung mit Temperatur durch Beaufschlagen mittels eines Heißluftstromes erfolgt, und insbesondere
- der Heißluftstrom stationär am Bewegungsweg des Produktes von der Spritzgussmaschine zur Produktablage angeordnet ist.

9. Verfahren nach einem der vorhergehenden Ansprüche,
**dadurch gekennzeichnet, dass**
das Produkt topfförmig ausgebildet ist und die Trennebenen axial von der offenen Seite und/oder radial nach außen weg verlaufen sowie das Produkt in einer Bewegungsrichtung parallel zur Öffnungsebene des Topfes durch einen Vorhang aus Heißluft, der senkrecht zur Öffnungsebene verläuft, bewegt wird.

10. Verfahren nach einem der vorhergehenden Ansprüche,
**dadurch gekennzeichnet, dass**
bei rotationssymmetrischen Produkten das Produkt während der Beaufschlagung mit Temperatur um seine Rotationsachse gedreht wird und insbesondere die Düse der Kontur des Produktes angepasst geformt ist, insbesondere unter Einhaltung eines gleichmäßigen Abstandes zur Kontur des Produktes.

11. Verfahren nach einem der vorhergehenden Ansprüche,
**dadurch gekennzeichnet, dass**
die Beaufschlagung ist in Abhängigkeit von der Beaufschlagungs-Temperatur so gewählt wird, dass
- die der zur Strömungsrichtung quer abstehenden Haare alle abgerissen sind und
- die entgegen der Strömungsrichtung abstehenden Haare flächig an der Oberfläche des Produktes angeschmolzen sind.

12. Verfahren nach einem der vorhergehenden Ansprüche,
**dadurch gekennzeichnet, dass**
die Strömungsrichtung wenigstens teilweise radial nach außen bezüglich der Topfform des Produktes gerichtet ist.

13. Verfahren nach einem der vorhergehenden Ansprüche,
**dadurch gekennzeichnet, dass**
die Temperatur mindestens 400°C, insbesondere mindestens 450°C beträgt und die Beaufschlagung Zeit mindestens fünf Sekunden, insbesondere in mindestens zehn Sekunden beträgt.

14. Verfahren nach einem der vorhergehenden Ansprüche,
**dadurch gekennzeichnet, dass**
die Düse Leitvorrichtungen enthält, welche die Strömungsrichtung bei allen Trennebenen quer zur Richtung des Abstrebens der Haare leitet.

15. Verfahren nach einem der vorhergehenden Ansprüche,
**dadurch gekennzeichnet, dass**
die Strömungsrichtung wenigstens teilweise tangential zur topfförmigen AußenKontur des Produktes gerichtet ist und insbesondere die Düse diesbezügliche Leitvorrichtungen enthält.
